# EUROPÄISCHE PATENTSCHRIFT

(11) **EP 3 583 676 B1**
(45) Veröffentlichungstag und Bekanntmachung des Hinweises auf die Patenterteilung: **26.05.2021**
(21) Anmeldenummer: 18720155.3
(22) Anmeldetag: 16.04.2018
(51) Int. Cl.: H02J 7/00, H02J 3/32, H01M 4/525, H01M 10/0525, H01M 10/44

(54) **BATTERIESPEICHERSYSTEM UND VERFAHREN ZUM BETREIBEN DES BATTERIESPEICHERSYSTEMS**
BATTERY STORAGE SYSTEM AND METHOD FOR OPERATING THE BATTERY STORAGE SYSTEM
SYSTÈME ACCUMULATEUR À BATTERIES ET PROCÉDÉ DE FONCTIONNEMENT DU SYSTÈME ACCUMULATEUR À BATTERIES

(30) Priorität: 05.05.2017 DE 102017207639
(43) Veröffentlichungstag der Anmeldung: 25.12.2019
(73) Patentinhaber: Siemens Aktiengesellschaft, 80333 München (DE)
(72) Erfinder: BETZIN, Christopher, 91301 Forchheim (DE); WOLFSCHMIDT, Holger, 91058 Erlangen (DE)
(86) Internationale Anmeldenummer: PCT/EP2018/059618
(87) Internationale Veröffentlichungsnummer: WO 2018/202408

(56) Entgegenhaltungen:
- US-A1- 2007 170 895
- US-A1- 2011 204 720
- XUE LIN ET AL: "A framework of concurrent task scheduling and dynamic voltage and frequency scaling in real-time embedded systems with energy harvesting", LOW POWER ELECTRONICS AND DESIGN, IEEE PRESS, 445 HOES LANE, PO BOX 1331, PISCATAWAY, NJ 08855-1331 USA, 4. September 2013 (2013-09-04), Seiten 70-75, XP058056362, DOI: 10.1109/ISLPED.2013.6629269 ISBN: 978-1-4799-1235-3

## Beschreibung

Die Erfindung betrifft ein Batteriespeichersystem und ein Verfahren zum Betreiben eines Batteriespeichersystems.

Eine Batterie ist ein Speicher für elektrische Energie auf elektrochemischer Basis. Handelt es sich um einen wiederaufladbaren Speicher wird dieser auch Akkumulator genannt. Ein einzelnes wiederaufladbares Speicherelement wird auch Sekundärelement genannt.

Batteriespeichersysteme, welche typischerweise eine Batterie, einen Wechselrichter und eine Steuerung umfassen, können neben der Energiespeicherung auch Netzdienstleistungen erbringen, also Leistung aus dem Stromnetz, insbesondere dem öffentlichen Stromnetz, entnehmen und dabei selbst geladen werden oder Leistung an ein Stromnetz abgeben und dabei selbst entladen werden. Aufgrund der schnellen Reaktionszeiten von Batterien ist das Laden und Entladen langfristig, insbesondere über mehrere Stunden, oder kurzfristig, insbesondere innerhalb von Sekunden, möglich.

Die US 2011/0204720 A1 offenbart ein Verfahren zum effizienten Betreiben eines Batteriespeichers, insbesondere für Gebäude oder Fahrzeuge.

Die US 2007/0170895 A1 offenbart ein Verfahren zum Laden eines Batteriespeichers, insbesondere mittels amplituden- oder frequenzmodulierter elektrischer Energie.

Durch Lade- und Entladevorgänge kommt es allerdings nachteilig zu teilweise irreversiblen elektrochemischen Vorgängen an den Elektroden des Batteriesystems. Weiterhin sind die Anforderungen an die Batterie hinsichtlich Nutzung und Lebensdauer gegensätzlich. Einerseits nimmt die Belastbarkeit bei höheren Temperaturen durch eine bessere Ionenbeweglichkeit zu, andererseits führt diese höhere Ionenbeweglichkeit durch die höhere Reaktionsfähigkeit der Elektrodenmaterialen nachteilig zu einer abnehmenden Lebensdauer und Kapazität.

Es ist daher Aufgabe der vorliegenden Erfindung ein Batteriespeichersystem und ein Verfahren zum Betrieb eines Batteriespeichersystems anzugeben, welches die Lebensdauer der Batterie verlängert.

Die Aufgabe wird mit einem Verfahren zum Betreiben eines Batteriespeichersystems gemäß Anspruch 1 und einem Batteriespeichersystem gemäß Anspruch 12 gelöst.

Das erfindungsgemäße Verfahren zum Betreiben eines Batteriespeichersystems umfasst mehrere Schritte. Wenigstens eine Batterie wird mit einem ersten Lastprofil mit einer ersten Anzahl Belastungszyklen pro Stunde mit einem ersten Leistungshub betrieben. Weiterhin wird eine Steuereinheit betrieben, welche ausgebildet ist, ein zweites Lastprofil zu generieren, wobei das zweite Lastprofil eine zweite Anzahl Belastungszyklen pro Stunde mit einem zweiten Leistungshub umfasst und die Steuereinheit ausgebildet ist, die Batterie mit dem zweiten Lastprofil zu beaufschlagen. Die Batterie wird mit dem zweiten Lastprofil beaufschlagt, wobei das erste Lastprofil mit dem zweiten Lastprofil überlagert wird und wobei die zweite Anzahl Belastungszyklen pro Stunde größer als die erste Anzahl Belastungszyklen pro Stunde ist und der zweite Leistungshub kleiner als der erste Leistungshub ist.

Als Lastprofil wird die zeitabhängige Belastung der Batterie mit Be- und Entladevorgängen bezeichnet, wobei die Be- und Entladevorgänge aus unterschiedlichen Stromquellen oder Stromsenken resultieren können. Als das erste Lastprofil kann genau ein Lastprofil oder mehrere sich überlagernde Lastprofile unterschiedlicher Verbraucher der Batterie verstanden werden.

Als Leistungshub wird hierbei der Unterschied in der Leistung der Batterie pro Zeiteinheit, insbesondere pro Stunde, bezeichnet.

Als Belastungszyklus wird hier eine Abfolge von einem Be- und einem Entladen der Batterie verstanden.

Das erfindungsgemäße Batteriespeichersystem zum Betreiben einer Batterie gemäß dem oben genannten Verfahren umfasst eine Batterie, welche geeignet ist zum Betreiben mit einem ersten Lastprofil mit einer ersten Anzahl Belastungszyklen pro Stunde mit einem ersten Leistungshub. Das Batteriespeichersystem umfasst weiterhin eine Steuereinheit, welche geeignet ist, die Batterie mit einem zweiten Lastprofil mit einer zweiten Anzahl Belastungszyklen pro Stunde mit einem zweiten Leistungshub zu beaufschlagen. Die zweite Anzahl Belastungszyklen pro Stunde ist größer als die erste Anzahl Belastungszyklen pro Stunde und der zweite Leistungshub ist kleiner als der erste Leistungshub.

Es wurde im Rahmen der Erfindung erkannt, dass die Batterie überraschenderweise einen geringeren Kapazitätsverlust aufweist, wenn ein erstes Lastprofil, welches insbesondere einen Belastungszyklus aufweist, welcher wenigstens mehrere Stunden beträgt, von einem zweiten Lastprofil überlagert wird, welches Mikrozyklen, also sehr kurze Belastungszyklen aufweist, welche insbesondere wenige Sekunden dauern. Der Kapazitätsverlust der Batterie ist dann vorteilhaft geringer als beim alleinigen Beaufschlagen der Batterie mit dem ersten Lastprofil.

In einer vorteilhaften Ausgestaltung und Weiterbildung der Erfindung liegt der zweite Leistungshub des zweiten Lastprofils in einem Bereich, der kleiner ist als die Hälfte des ersten Leistungshubs des ersten Lastprofils. Vorteilhaft ist der Kapazitätsverlust der Batterie beim Überlagern des ersten Lastprofils mit dem zweiten Lastprofil dann deutlich geringer.

In einer weiteren vorteilhaften Ausgestaltung und Weiterbildung der Erfindung liegt das zweite Lastprofil in einem Bereich zwischen 0,1 % und 15 % einer Entladungstiefe der Batterie. In diesem Bereich wird die Batterie vorteilhaft durch das Aufprägen des zweiten Lastprofils nicht zusätzlich gestresst, sondern der Kapazitätsverlust wird vorteilhaft verringert.

In einer weiteren vorteilhaften Ausgestaltung und Weiterbildung der Erfindung weist das zweite Lastprofil C raten von maximal C/6 auf. Besonders bevorzugt weist das zweite Lastprofil C raten zwischen C/6 und C/2 auf.

In einer weiteren vorteilhaften Ausgestaltung und Weiterbildung der Erfindung wird das zweite Lastprofil derart generiert, dass es eine zum ersten Lastprofil entgegengesetzte Phase aufweist. Vorteilhaft werden dadurch die Absolutbelastungen der Batterie verringert und es wird eine Gegenreaktion der Batteriechemie erzeugt, welche vorteilhaft zu einer Homogenisierung innerhalb der Elektrodenmaterialen führt. Dies führt vorteilhaft zu einer längeren Lebensdauer der Batterie.

Das zweite Lastprofil wird insbesondere aus Primärregelleistung, Sekundärregelleistung oder aus einem Stromhandel generiert. Diesen Systemen kann sowohl elektrische Leistung entzogen als auch zugeführt werden.

In einer weiteren vorteilhaften Ausgestaltung und Weiterbildung der Erfindung erfolgt die Überlagerung des ersten und zweiten Lastprofils in einem Batterietemperaturbereich zwischen 15 °C und 35 °C. In diesem Temperaturbereich der Batterie werden die Batterien nicht durch sehr hohe oder sehr niedrige Temperaturen gestresst, sodass ein Kapazitätsverlust vorteilhaft niedrig gehalten wird.

In einer weiteren vorteilhaften Ausgestaltung und Weiterbildung der Erfindung setzt das erste Lastprofil eine erste Energiemenge um und das zweite Lastprofil setzt eine zweite Energiemenge um. Die zweite Energiemenge liegt in einem Bereich von 5 % bis 40 % der ersten Energiemenge. Vorteilhaft wird dadurch die Energiemenge für das zweite Lastprofil eingeschränkt.

In einer weiteren vorteilhaften Ausgestaltung und Weiterbildung der Erfindung weist das erste Lastprofil eine erste Maximalleistung auf. Das zweite Lastprofil weist eine zweite Maximalleistung auf. Die zweite Maximalleistung beträgt weniger als 50 % der ersten Maximalleistung des ersten Lastprofils. Vorteilhaft ist es dadurch möglich die Gesamtleistung des Systems nicht zu groß auszulegen, was wiederum eine geringere Gesamtleistung zur Folge hat. Weiterhin werden geringere Stromtragfähigkeiten der Zuleitungen vorteilhaft eingehalten. Vorteilhaft wird dadurch auch lediglich ein begrenzter Spannungshub bei Aufprägung des zweiten Lastprofils auf die Batterie erzeugt.

In einer weiteren vorteilhaften Ausgestaltung und Weiterbildung der Erfindung wird die Batterie mit dem Lastprofil einer Photovoltaikanlage als erstem Lastprofil betrieben.

In einer weiteren vorteilhaften Ausgestaltung und Weiterbildung der Erfindung wird als Batterie ein Lithium-Ionen-Speicher verwendet.

In einer weiteren vorteilhaften Ausgestaltung und Weiterbildung der Erfindung weist der Lithium-Ionen Speicher eine Nickel-Kobalt-Aluminium-Kathode auf.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein erstes Lastprofil einer Batterie bei Betrieb einer Photovoltaikanlage;
- Figur 2: ein zweites Lastprofil der Batterie mit Mikrozyklen;
- Figur 3: ein drittes Lastprofil einer Batterie mit dem ersten und zweiten Lastprofil überlagert;
- Figur 4: ein Vergleich der Kapazitätsverluste der Batterie in Betrieb mit dem ersten Lastprofil, dem zweiten Last-profil und dem überlagerten Lastprofil;
- Figur 5: ein Batteriespeichersystem.

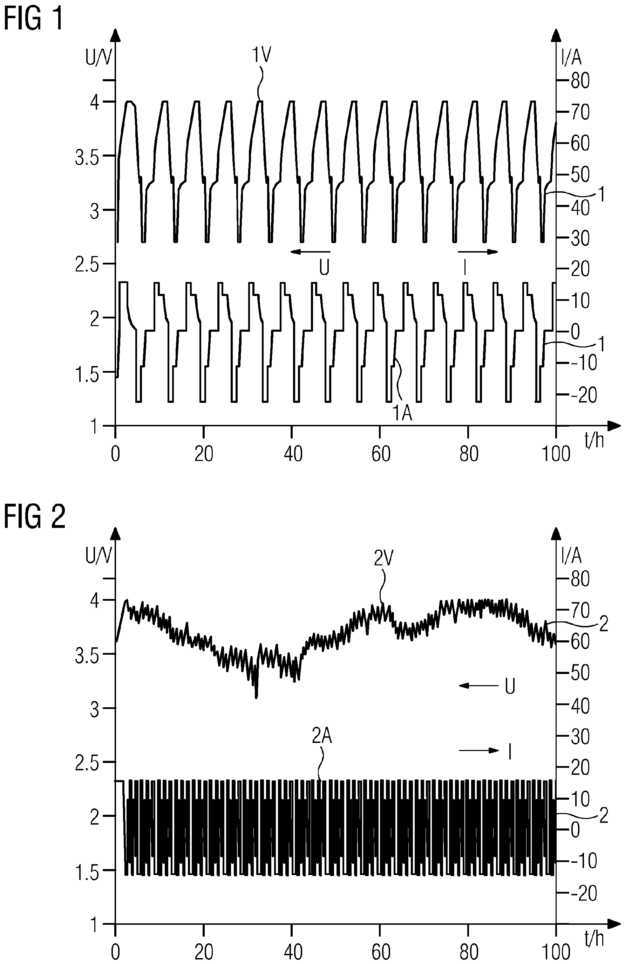

Figur 1 zeigt ein erstes Lastprofil 1 einer Batterie, wobei auf der linken y-Achse die Spannung U in Volt, auf der rechten y-Achse der Strom I in Ampere und auf der x-Achse die Zeit in Stunden aufgetragen ist. Die Batterie wird mittels einer Photovoltaikanlage be- und entladen. Es ist zu sehen, dass nur wenige Strom- bzw. Spannungswechsel stattfinden. Typischerweise umfasst dieses erste Lastprofil 1 zwischen 5 und 20 Spannungswechsel bzw. Stromwechsel pro 100 Stunden. Ein Spannungshub, bzw. Spannungswechsel liegt bei dem ersten Lastprofil 1V insbesondere in einem Bereich zwischen 0,7 und 2 V. Der Stromhub, bzw. Stromwechsel des ersten Lastprofils 1A liegt typischerweise in einem Bereich zwischen +/- 5 A und +/- 30 A.

Figur 2 zeigt, wie Figur 1, auf der linken y-Achse die Spannung U in Volt, auf der rechten y-Achse den Strom I in Ampere und auf der x-Achse die Zeit in Stunden. Das Diagramm zeigt das zweite Lastprofil 2 beim Betrieb der Batterie mit vielen kleinen Spannungs- und Stromwechseln, insbesondere bei der Anwendung der Primärregelleistungserbringung. Die vielen kleinen Spannungs- und Stromwechsel werden hier Mikrozyklen genannt. Viele Spannungs- bzw. Stromwechsel bedeuten insbesondere wenigstens 4 Spannungswechsel in der Stunde. Dies ist vorteilhaft, da im Stromhandel typischerweise alle 15 Minuten abgerechnet wird. Kleine Stromwechsel liegen insbesondere in einer Größenordnung zwischen 0 und +/- 15 A. Geringe Spannungswechsel, auch Spannungshub genannt, liegen in einem Bereich von 0,5 V bis 0,1 V. Der Leistungshub kann anhand des Produkts aus Strom- und Spannungshüben berechnet werden.

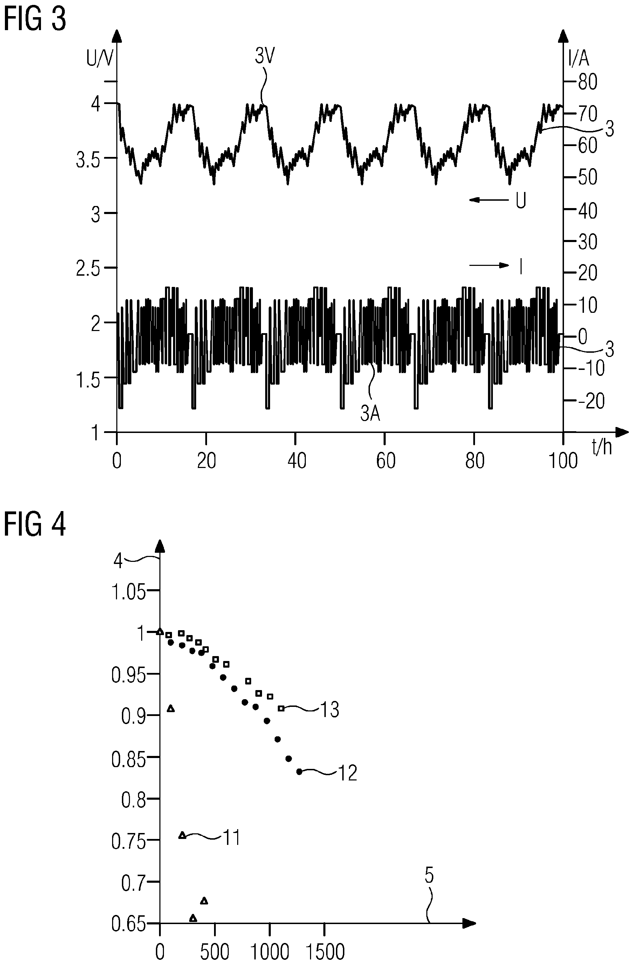

Figur 3 zeigt wiederum Strom I und Spannung U gegen die Zeit und bildet ein drittes Lastprofil ab, in dem das erste Lastprofil 1 und das zweite Lastprofil 2 überlagert werden.

Figur 4 zeigt die aktuelle Kapazität pro anfänglicher Kapazität 4 auf der y-Achse und die äquivalenten Vollzyklen auf der x-Achse. Als äquivalenter Vollzyklus wird definiert: Summe der durchgesetzten Energie durch die Speicherkapazität des Speichersystems. Beispielsweise sind sowohl 100 volle Lade/Entladezyklen und 400 25% Lade/Entladezyklen in der Summe 200 äquivalente Vollzyklen.

Figur 4 zeigt einen ersten Kapazitätsverlust 11 der Batterie bei Betrieb mit dem ersten Lastprofil 1, einen zweiten Kapazitätsverlust 12 der Batterie bei Betrieb mit dem zweiten Lastprofil 2 und einen dritten Kapazitätsverlust 13 der Batterie bei Betrieb mit dem dritten überlagerten Lastprofil 3. Es ist deutlich zu sehen dass der erste Kapazitätsverlust, der den Betrieb der Batterie mit der Photovoltaikanlage beschreibt, am größten ist. Bereits bei knapp 500 Vollzyklen ist die Kapazität bezogen auf die anfängliche Kapazität von 1 auf 0,67 gesunken. Auch das zweite Lastprofil 2 führt zu einem zweiten Kapazitätsverlust der Batterie. Dieser zweite Kapazitätsverlust ist jedoch deutlich geringer als der erste Kapazitätsverlust. Auch bei 1000 Vollzyklen beträgt die Kapazität im Vergleich zur anfänglich Kapazität noch 85 %. Es hat sich überraschend gezeigt, dass das dritte Lastprofil, bei welchem das erste und zweite Lastprofil überlagert werden, den geringsten dritten Kapazitätsverlust 13 aufweist. Bei 1000 Vollzyklen beträgt die Kapazität vorteilhaft immer noch 90 % der ursprünglichen Kapazität.

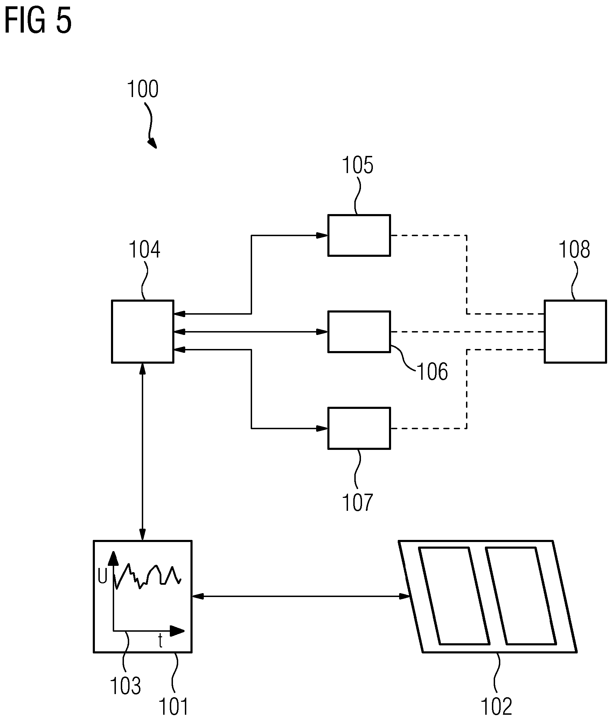

Figur 5 zeigt ein Batteriespeichersystem 100 mit einer Batterie 101, einer Photovoltaikanlage 102 und einer Steuereinheit 104. Die Batterie 101 ist mit der Photovoltaikanlage 102 elektrisch verbunden. Je nach Sonneneinstrahlung wird die Batterie mit einem Lastprofil, insbesondere mit einem ersten Lastprofil 1 betrieben. Weiterhin ist die Batterie 101 mit einer Steuereinheit 104 verbunden. Diese Steuereinheit ist dazu geeignet Mikrozyklen auf die Batterie aufzuprägen. Die Steuereinheit 104 kann den Strom entweder als Primärregelleistung 105, als Sekundärregelleistung 106 oder aus dem Strommarkt 107 entnehmen. Das Stromnetz 108 ist somit direkt oder indirekt mit der Steuereinheit 104 verbunden. Die Steuereinheit 104 überlagert das erste Lastprofil 1 der Photovoltaikanlage 102 derart mit einem zweiten Lastprofil 2 umfassend Mikrozyklen, dass der Kapazitätsverlust der Batterie vorteilhaft sehr gering ist. Die Steuereinheit umfasst dabei mehrere Funktionen: Sie wertet erfindungsgemäß das erste Lastprofil an der Batterie aus, bestimmt erfindungsgemäß darauf beruhend das zweite Lastprofil und überlagert das erste Lastprofil in der Batterie mit dem zweiten Lastprofil und steuert die Aufprägung des zweiten Lastprofils hinsichtlich der Leistung und der Frequenz und bestimmt dabei die Kapazität der Batterie und der Verluste.

## Patentansprüche

1. Verfahren zum Betreiben eines Batteriespeichersystems (100) mit folgenden Schritten:
- Betreiben wenigstens einer Batterie (101) mit einem ersten Lastprofil (1) mit einer ersten Anzahl Belastungszyklen pro Stunde mit einem ersten Leistungshub,
- Betreiben einer Steuereinheit (104) ausgebildet zum Auswerten des ersten Lastprofils an der Batterie, zum Bestimmen eines darauf beruhenden zweiten Lastprofils und zum Generieren des zweiten Lastprofils (2) mit einer zweiten Anzahl Belastungszyklen pro Stunde mit einem zweiten Leistungshub und ausgebildet zum Beaufschlagen der Batterie (101) mit dem zweiten Lastprofil (2),
- Beaufschlagen der Batterie (101) mit dem zweiten Lastprofil (2), wobei das ersten Lastprofil (1) mit dem zweiten Lastprofil (2) überlagert wird und wobei die zweite Anzahl Belastungszyklen pro Stunde größer als die erste Anzahl Belastungszyklen pro Stunde ist und der zweite Leistungshub kleiner als der erste Leistungshub ist.

2. Verfahren nach Anspruch 1, wobei der zweite Leistungshub des zweiten Lastprofils (2) in einem Bereich kleiner als die Hälfte des ersten Leistungshubs des ersten Lastprofils (1) liegt.

3. Verfahren nach einem der vorhergehenden Ansprüche, wobei das zweite Lastprofil (2) in einem Bereich zwischen 0,1% und 15% einer Entladungstiefe der Batterie liegt.

4. Verfahren nach Anspruch 3, wobei das zweite Lastprofil (2) in einem Bereich zwischen 5% und 15% der Entladungstiefe der Batterie (101) liegt.

5. Verfahren nach einem der vorhergehenden Ansprüche, wobei das zweite Lastprofil (2) C-Raten von maximal C/6 aufweist.

6. Verfahren nach Anspruch 5, wobei das zweite Lastprofil (2) C-Raten zwischen C/6 und C/2 aufweist.

7. Verfahren nach einem der vorhergehenden Ansprüche, wobei die Überlagerung des ersten (1) und zweiten Lastprofils (2) in einem Batterie-Temperaturbereich zwischen 15°C und 35°C erfolgt.

8. Verfahren nach einem der vorhergehenden Ansprüche, wobei das erste Lastprofil (1) eine erste Energiemenge umsetzt das zweite Lastprofil (2) eine zweite Energiemenge umsetzt und die zweite Energiemenge in einem Bereich von 5% bis 40% der ersten Energiemenge liegt.

9. Verfahren nach einem der vorhergehenden Ansprüche, wobei das erste Lastprofil (1) eine erste Maximalleistung aufweist und das zweite Lastprofil (2) eine zweite Maximalleistung aufweist und die zweite Maximalleistung weniger als 50% der ersten Maximalleistung des ersten Lastprofils beträgt.

10. Verfahren nach einem der vorhergehenden Ansprüche, wobei das erste Lastprofil (1) ein Lastprofil einer Photovoltaikanlage (102) ist.

11. Verfahren nach einem der vorhergehenden Ansprüche, wobei als Batterie (101) ein Lithium-Ionen-Speicher verwendet wird.

12. Batteriespeichersystem (100) zum Betreiben mit einem Verfahren gemäß einem der Ansprüche 1 bis 11 umfassend:
- eine Batterie (101) eingerichtet zum Betreiben mit einem ersten Lastprofil (1) mit einer ersten Anzahl Belastungszyklen pro Stunde mit einem ersten Leistungshub,
- eine Steuereinheit (104) eingerichtet zum Auswerten des ersten Lastprofils an der Batterie, zum Bestimmen eines darauf beruhenden zweiten Lastprofils und zum Beaufschlagen der Batterie (101) mit dem zweiten Lastprofil (2) mit einer zweiten Anzahl Belastungszyklen pro Stunde mit einem zweiten Leistungshub, wobei die zweite Anzahl Belastungszyklen pro Stunde größer als die erste Anzahl Belastungszyklen pro Stunde ist und der zweite Leistungshub kleiner als der erste Leistungshub ist.

13. Batteriespeichersystem (100) nach Anspruch 12, wobei die Batterie (101) ein Lithium-Ionen-Speicher ist.

14. Batteriespeichersystem (100) nach Anspruch 13, wobei der Lithium-Ionen-Speicher eine Nickel-Cobalt-Aluminium-Kathode aufweist.

## Claims

1. Method for operating a battery storage system (100), having the following steps:
- operating at least one battery (101) with a first load profile (1) having a first number of load cycles per hour with a first power swing,
- operating a control unit (104) designed to evaluate the first load profile at the battery, to determine a second load profile on the basis thereof and to generate the second load profile (2) with a second number of load cycles per hour with a second power swing, and designed to apply the second load profile (2) to the battery (101),
- applying the second load profile (2) to the battery (101), wherein the second load profile (2) is superimposed on the first load profile (1), and wherein the second number of load cycles per hour is greater than the first number of load cycles per hour and the second power swing is smaller than the first power swing.

2. Method according to Claim 1, wherein the second power swing of the second load profile (2) is within a range smaller than half the first power swing of the first load profile (1).

3. Method according to either of the preceding claims, wherein the second load profile (2) is within a range between 0.1% and 15% of a discharge depth of the battery.

4. Method according to Claim 3, wherein the second load profile (2) is within a range between 5% and 15% of the discharge depth of the battery (101).

5. Method according to one of the preceding claims, wherein the second load profile (2) has C-rates of at most C/6.

6. Method according to Claim 5, wherein the second load profile (2) has C-rates between C/6 and C/2.

7. Method according to one of the preceding claims, wherein the superimposition of the first load profile (1) and second load profile (2) takes place in a battery temperature range between 15°C and 35°C.

8. Method according to one of the preceding claims, wherein the first load profile (1) converts a first quantity of energy, the second load profile (2) converts a second quantity of energy, and the second quantity of energy is within a range from 5% to 40% of the first quantity of energy.

9. Method according to one of the preceding claims, wherein the first load profile (1) has a first maximum power output and the second load profile (2) has a second maximum power output and the second maximum power output is less than 50% of the first maximum power output of the first load profile.

10. Method according to one of the preceding claims, wherein the first load profile (1) is a load profile of a photovoltaic installation (102).

11. Method according to one of the preceding claims, wherein a lithium-ion storage unit is used as the battery (101).

12. Battery storage system (100) for operation using a method according to one of Claims 1 to 11, comprising:
- a battery (101) designed for operation with a first load profile (1) having a first number of load cycles per hour with a first power swing,
- a control unit (104) designed to evaluate the first load profile at the battery, to determine a second load profile on the basis thereof and to apply the second load profile (2) to the battery (101) with a second number of load cycles per hour with a second power swing, wherein the second number of load cycles per hour is greater than the first number of load cycles per hour and the second power swing is smaller than the first power swing.

13. Battery storage system (100) according to Claim 12, wherein the battery (101) is a lithium-ion storage unit.

14. Battery storage system (100) according to Claim 13, wherein the lithium-ion storage unit has a nickel-cobalt-aluminium cathode.

## Revendications

1. Procédé pour faire fonctionner un système (100) accumulateur à batterie, ayant les stades suivants :
- fonctionnement d'au moins une batterie (5) à un premier profil (1) de charge avec un premier nombre de cycles de charge à l'heure avec une première course de puissance,
- fonctionnement d'une unité (104) de commande constituée pour exploiter le premier profil de charge sur la batterie, afin de déterminer un deuxième profil de charge reposant sur celui-ci et afin de créer le deuxième profil (2) de charge avec un deuxième nombre de cycles de charge à l'heure à une deuxième course de puissance, et constituée pour alimenter la batterie (101) au deuxième profil (2) de charge,
- alimentation de la batterie (101) au deuxième profil (2) de charge, le premier profil (1) de charge étant superposé au deuxième profil (2) de charge et le deuxième nombre de cycles de charge à l'heure étant plus grand que le premier nombre de cycles de charge à l'heure et la deuxième course de puissance étant plus petite que la première course de puissance.

2. Procédé suivant la revendication 1, dans lequel la deuxième course de puissance du deuxième profil (2) de charge est dans une plage plus petite que la moitié de la première course de puissance du premier profil (1) de charge.

3. Procédé suivant l'une des revendications précédentes, dans lequel le deuxième profil (2) de charge est dans une plage représentant entre 0,1% et 15% d'une profondeur de décharge de la batterie.

4. Procédé suivant la revendication 3, dans lequel le deuxième profil (2) de charge est dans une plage représentant entre 5% et 15% d'une profondeur de décharge de la batterie (101).

5. Procédé suivant l'une des revendications précédentes, dans lequel le deuxième profil (2) de charge a des taux C de C/6 au maximum.

6. Procédé suivant la revendication 5, dans lequel le deuxième profil (2) de charge a des taux C compris entre C/6 et C/2.

7. Procédé suivant l'une des revendications précédentes, dans lequel la superposition du premier profil (1) et du deuxième profil (2) de charge a lieu dans une plage de température de la batterie comprise entre 15°C et 35°C.

8. Procédé suivant l'une des revendications précédentes, dans lequel le premier profil (1) de charge transforme une première quantité d'énergie, le deuxième profil (2) de charge transforme une deuxième quantité d'énergie et la deuxième quantité d'énergie est dans une plage représentant de 5% à 40% de la première quantité d'énergie.

9. Procédé suivant l'une des revendications précédentes, dans lequel le premier profil (1) de charge a une première puissance maximum et le deuxième profil (2) de charge a une deuxième puissance maximum et la deuxième puissance maximum représente moins de 50 % de la première puissance maximum du premier profil de charge.

10. Procédé suivant l'une des revendications précédentes, dans lequel le premier profil (1) de charge est un profil de charge d'une installation (102) photovoltaïque.

11. Procédé suivant l'une des revendications précédentes, dans lequel on utilise un accumulateur lithium-ions comme batterie (101) .

12. Système (100) accumulateur à batterie pour le fonctionnement par un procédé suivant l'une des revendications 1 à 11, comprenant :
- une batterie (101) conçue pour le fonctionnement à un premier profil (1) de charge avec un premier nombre de cycles de charge à l'heure à une première course de puissance,
- une unité (104) de commande conçue pour exploiter le premier profil de charge sur la batterie, afin de déterminer un deuxième profil de charge reposant sur celui-ci et afin d'alimenter la batterie (101) au deuxième profil (2) de charge avec un deuxième nombre de cycles de charge à l'heure avec une deuxième course de puissance, le deuxième nombre de cycles de charge à l'heure étant plus grand que le premier nombre de cycles de charge à l'heure et la deuxième course de puissance étant plus petite que la première course de puissance.

13. Système (100) accumulateur à batterie suivant la revendication 12, dans lequel la batterie (101) est un accumulateur lithium-ions.

14. Système (100) accumulateur à batterie suivant la revendication 13, dans lequel l'accumulateur lithium-ions a une cathode en nickel-cobalt-aluminium.
